# EUROPÄISCHE PATENTSCHRIFT

(11) **EP 0 968 747 B1**
(45) Veröffentlichungstag und Bekanntmachung des Hinweises auf die Patenterteilung: **04.05.2005**
(21) Anmeldenummer: 99111915.7
(22) Anmeldetag: 21.06.1999
(51) Int. Cl.: B01D 21/02

(54) **Klärbeckenrandabdeckung (Kronenstein) für Räumerlaufbahn mit integrierter, obenliegender Beheizung**
Clarifier flange cover (crown stone) for scraper track with integrated overhead heating means
Couverture du rebord (pierre de couronne) d'un bassin de décantation, pour piste de racloir, avec moyen de chauffage intégré, situé en haut

(30) Priorität: 29.06.1998 DE 29811603 U
(43) Veröffentlichungstag der Anmeldung: 05.01.2000
(73) Patentinhaber: Wilhelm, Friedrich, 85452 Moosinning (DE); Hofmann, Friedrich, 90455 Nürnberg (DE)
(72) Erfinder: Wilhelm, Friedrich, 85452 Moosinning (DE)

(56) Entgegenhaltungen:
- AT-B- 392 257
- DE-A- 3 315 007
- DE-A- 3 716 357
- DE-A- 4 220 679
- DE-C- 4 212 826
- DE-U- 29 702 027

## Beschreibung

Die Erfindung betrifft eine beheizbare Einrichtung an Mauerkronen von Nachklärbecken o. dgl. bei Kläranlagen, wobei entlang der Mauerkrone auf ihrer Oberseite verlegte und fest mit ihr verbundene, beheizbare Polymerbeton-Auflagen (Kronensteine) vorgesehen sind, die als Laufbahnen für Räumer dienen.

Sie betrifft die Beheizung von Klärbeckenrändem und die Abdeckung dieser Heizung nach dem Oberbegriff der Ansprüche 1 bis 6.

Einrichtungen dieser Art sind als metallische Auflagen aus AT-B-3 92 257 und DE-A-42 20 679 bekannt. Bei diesen bekannten Einrichtungen sind entlang der Mauerkrone auf ihrer Oberseite verlegte einzelne, lang gestreckte und stirnseitig aneinander stoßende metallische Vorrichtungen angebracht, die mit der Mauerkrone verschraubt oder, bei DE-A-42 20 679, verklebt sind.

In der Oberseite sind Aussparungen vorgesehen, die Heizkabel aufnehmen. Diese Aussparungen werden mit metallischen Platten, mit Dichtmasse oder Fugenband abgedeckt.

Diese metallischen Einrichtungen haben sich im Prinzip in der Praxis bewährt, was die Funktion "Beheizung" und Schutz der Laufbahn bezüglich mechanischer Belastung betrifft.

Ausgehend von diesem Stand der Technik zielt die Erfindung darauf ab, diese Einrichtungen dahingehend zu verbessern, die bekannten Nachteile von metallischen Auflagen, was Befestigung an der Mauerkrone und Schutz vor Feuchtigkeit der Maueroberfläche betrifft und die Nachteile von mineralischen bzw. mineralisch-organischen Abdeckungen bezüglich der Beheizung, dass ein Auswechseln von Kronenstein oder Heizleitung ohne Beschädigung des anderen Teils (Auswechslung Kronenstein = Beschädigung Heizleitung und umgekehrt) möglich ist, wesentlich weniger Energie zum Erwärmen der Laufbahnoberfläche benötigt wird und die Aufheizdauer mindestens halbiert wird, abzustellen.

Herkömmliche Heizungen werden teils direkt in den Oberflächenbeton eingebracht. Dies hat aufgrund der hohen Temperaturdifferenzen zur Folge, dass sich nach relativ kurzer Zeit Risse im Beton bilden und die Anlage saniert werden muss. Andernteils werden die Heizungen unter Abdeckungen, wie Kronensteinen oder Stahlblechabdeckungen im Mörtelbett installiert, wodurch ein höherer Energieaufwand erforderlich ist, um die Oberfläche zu erwärmen. Außerdem besteht beim Auswechseln eines Kronensteines oder der Stahlblechabdeckung die Gefahr, dass die Heizung beschädigt und ausgewechselt, zumindest aber repariert werden muss. Des Weiteren müssen bei einem Ausfall der Heizung mindestens eine, meistens jedoch alle Abdeckungen entfernt und neu aufgebracht werden.

Es ist daher Aufgabe der vorliegenden Erfindung, einen Kronenstein mit integrierter Heizung derart auszubilden, dass
1. die Erwärmung der Oberfläche möglichst kurzfristig und mit geringem Energieaufwand erfolgt und
2. ein Auswechseln von Kronensteinen oder der Heizung ohne Beschädigung der anderen Komponenten möglich ist.

Dazu sind drei Komponenten erforderlich:

### 1. Kronenstein

Der Kronenstein besteht aus Polymerbeton und hat mindestens eine und bis zu sechs Aussparungen (Nuten) zur Aufnahme der Heizleitungen. Diese Aussparungen werden eingefräst oder bei der

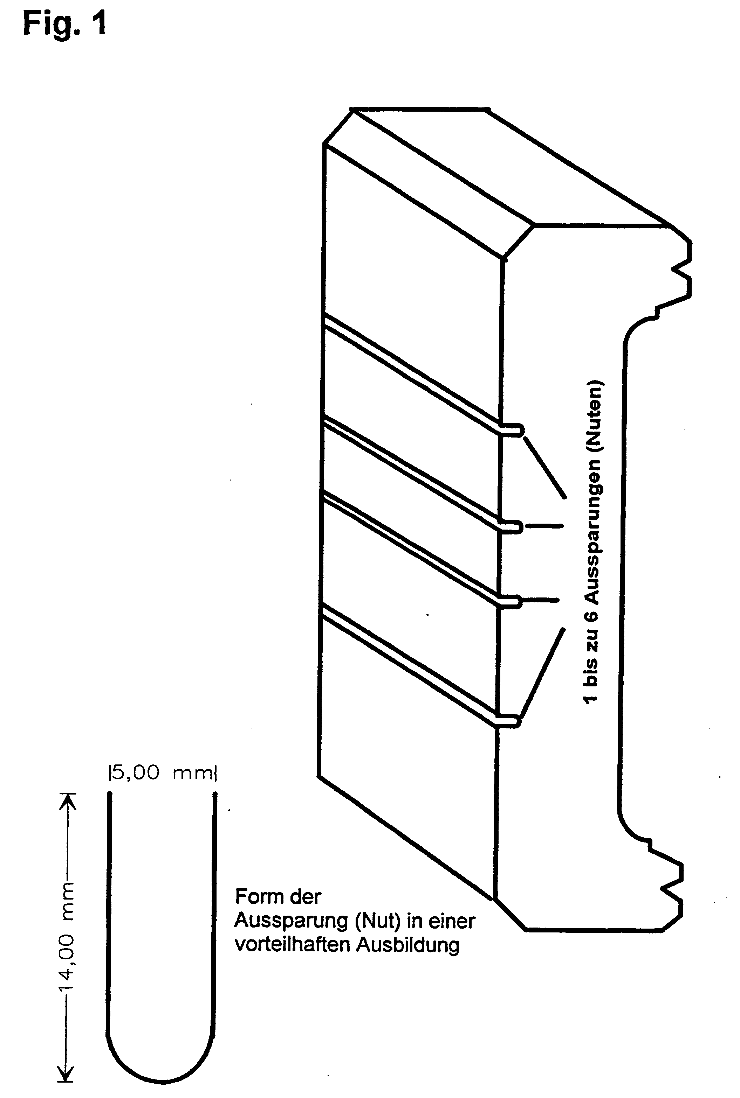

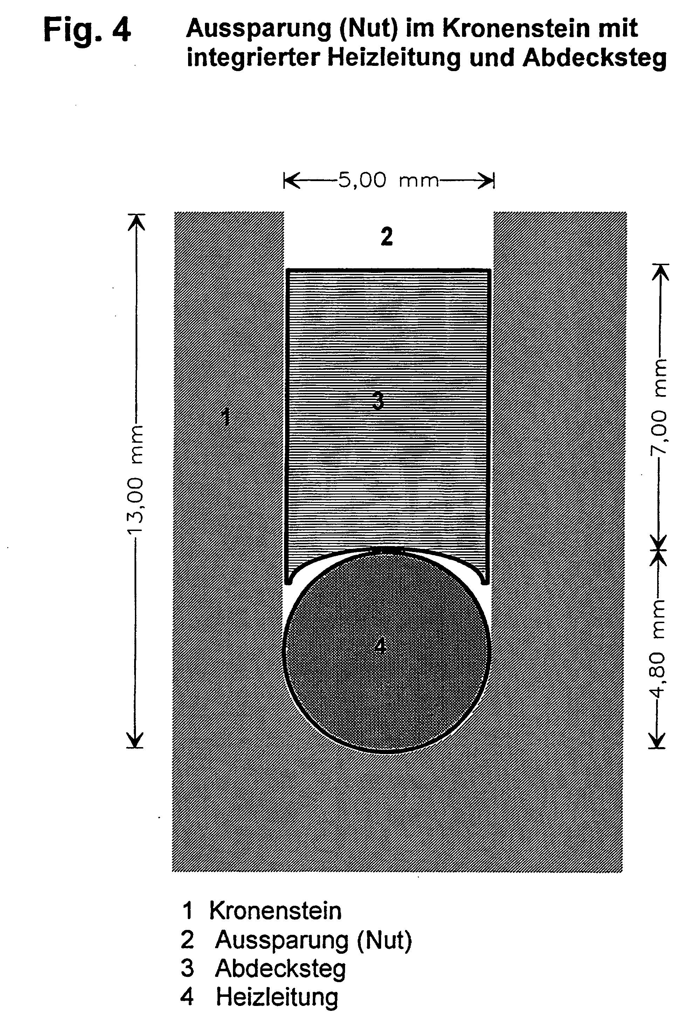

Produktion der Steine durch eine eingelegte Form ausgebildet. Vorteilhaft ist eine Rundung am Boden der Aussparung, damit die Heizleitung vollflächig aufliegt (Fig. 1 und 4).

### 2. Heizleitung

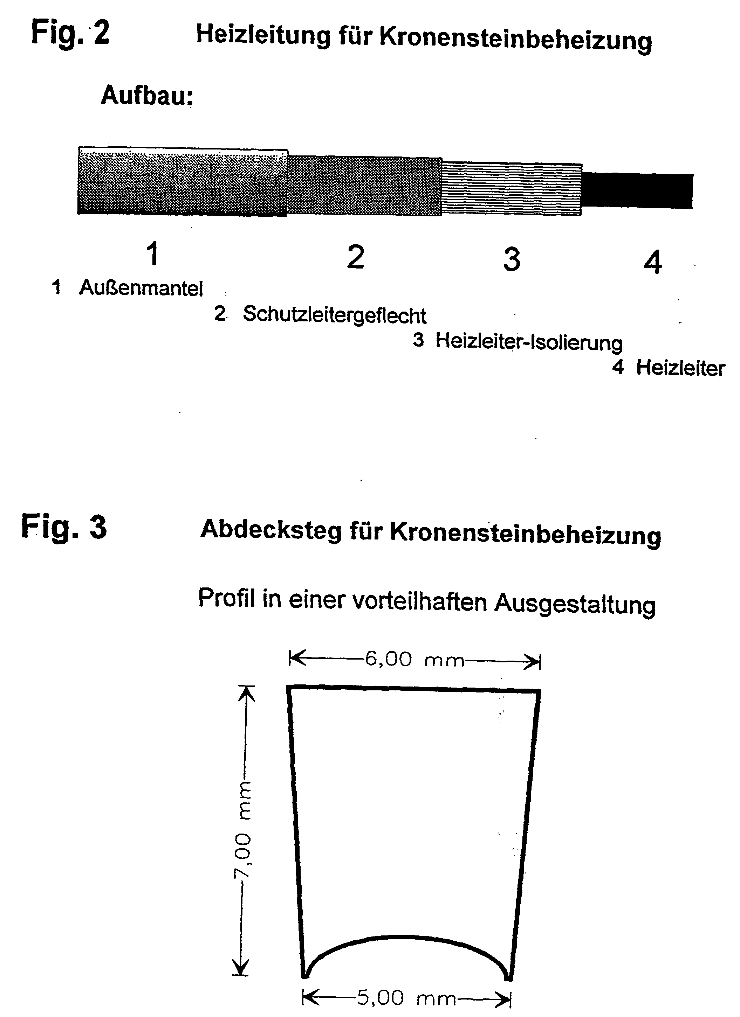

Die Heizleitung wird in die Aussparungen (Nuten) im Kronenstein eingebracht (Fig. 4). Vorteilhaft ist die Verwendung sehr dünner Heizleitungen, um die Aussparung (Nut) im Kronenstein klein halten zu können, damit die Festigkeit des Steins erhalten bleibt. Als Heizleitungen kommen handelsübliche Produkte zum Einsatz. In einer vorteilhaften Ausgestaltung der Erfindung bestehen die Isolationsmaterialien aus Teflon (Fig. 2).

### 3. Abdeckung der Heizleitung

Um zu verhindern, dass sich Schmutz in den Aussparungen (Nuten) des Kronensteins ablagert und das Gewicht des Räumerrades die Heizleitungen beschädigt, werden die Heizleitungen durch eine Abdeckung geschützt (Fig. 3 und 4).

In einer vorteilhaften Ausgestaltung der Erfindung besteht diese Abdeckung aus UV-beständigem, verrottungsfestem Material, möglichst EPDM, da dieses Material bekanntermaßen verrottungsfest und flexibel ist. Vorzugsweise ist diese Abdeckung (Steg) trapezförmig (Fig. 3), am oberen Teil ca. 1 mm breiter als die Aussparung (Nut) im Kronenstein und unten mit der gleichen Breite wie diese Nut, damit zur Befestigung keine anderen Materialien verwendet werden müssen und dieser Steg in der Nut festsitzt. Vorteilhaft ist eine Rundung über den Heizleitungen ausgestaltet (Fig. 3 und 4), damit der Steg vollflächig auf der Heizleitung aufliegt und Drücke, wie sie bei aufliegendem Schmutz durch das Räumerrad entstehen können, gleichmäßig auf die Heizleitung verteilt werden und diese nicht schädigen können.

## Patentansprüche

1. Vorrichtung zur Abdeckung von Räumerlaufbahnen (Kronenstein) aus Polymerbeton **dadurch gekennzeichnet, dass** sich Aussparungen oder Nuten in der Oberfläche befinden und diese Aussparungen durch eine Abdeckung abgedeckt werden.

2. Kronenstein nach Anspruch 1 **dadurch gekennzeichnet, dass** die Aussparungen am Boden rund sind , um sich der Form der Heizleitung anzupassen.

3. Kronenstein nach Anspruch 1 **dadurch gekennzeichnet, dass** in die Aussparungen Heizleitungen zur Beheizung der Oberfläche des Kronensteines eingebracht sind.

4. Kronenstein nach Anspruch 1 **dadurch gekennzeichnet, dass** die Abdeckung aus verrottungs- und UV-beständigem Material ausgebildet ist.

5. Kronenstein Anspruch 1 **dadurch gekennzeichnet, dass** die Abdeckung in einer Trapezform ausgebildet ist.

6. Kronenstein nach Anspruch 1 **dadurch gekennzeichnet, dass** die Abdeckung am Boden konkav ausgebildet ist, um sich der Rundung der Heizleitung anzupassen.

## Claims

1. Arrangement of a clarifier flange cover (crown stone) for the scraper track made of polymer concrete **characterized by** notches or slots in the surface and plugged up by a cover profile.

2. Crown stone according to claim 1 **characterized by** slots rounded at the bottom to fit the form of the heating cables.

3. Crown stone according to claim 1 **characterized by** heating cables inserted to heat the surface of the crown stones.

4. Crown stone according to claim 1 **characterized by** a cover profile made of material resistant to rotting and UV-rays.

5. Crown stone according to claim 1 **characterized by** the cover profile formed in a trapezoidal shape.

6. Crown stone according to claim 1 **characterized by** the cover profile formed concave at the lower end to adjust to the roundness of the heating cable.

## Revendications

1. Dispositif pour recouvrir les pistes de racloir (pierre de couronne) en béton polymère, et **caractérise par** des rainures a la surface et le recouvrement de ces rainures grace a un couvercle.

2. Pierre de couronne, selon les exigences du paragraphe 1, **caractérise par** des rainures arrondies a la base, afin de s'adapter a la forme des câbles chauffage.

3. Pierre de couronne, selon les exigences du paragraphe 1, **caractérisée par** l'installation de câbles de chauffage insères dans les rainures, pour chauffer la surface de la pierre de couronne.

4. Pierre de couronne, selon les exigences du paragraphe 1, **caractérisée par** un couvercle de recouvrement fait dans un matériau empêchant toute décomposition et résistant aux rayons ultraviolets.

5. Pierre de couronne, selon les exigences du paragraphe 1, **caractérisée par** la forme trapèze du couvercle de recouvrement.

6. Pierre de couronne, selon les exigences du paragraphe 1, **caractérisée par** la forme concave de la base du couvercle de recouvrement, afin d'être adapte a la forme ronde des câbles de chauffage.
